# EUROPEAN PATENT APPLICATION

(11) **EP 3 050 827 A1**
(43) Date of publication of application: **03.08.2016**
(21) Application number: 15153279.3
(22) Date of filing: 30.01.2015
(51) Int. Cl.: B65G 13/07

(54) **Compact gear and drive unit**

(71) Applicant: Dematic GmbH, 63073 Offenbach (DE)
(72) Inventor: Rehm, Pascal, 33617 Bielefeld (DE); Rollwa, Volker Dieter, 66953 Pirmasens (DE)
(74) Representative: Moser Götze & Partner Patentanwälte mbB

(57) **Abstract**

Compact gear and drive unit, especially for conveyors, with a housing, a motor roller for direct connection with a drive motor and a drive roller for driving a roller of a conveyor by means of an endless traction means, wherein said motor roller drives said drive roller by means of a second endless traction means and wherein the motor roller, drive roller and second endless traction means are all located within the housing.

## Description

The invention relates to a compact gear and drive unit, especially for use in conveyors according to claim 1.

It is known to mount gears and drives to the side rails of conveyors for driving roller. For example US 2011/0297509 A1 discloses a motor with a separate reducer that is mounted to the outer side of a side rail of an accumulation conveyor and is coupled directly to a shaft of a drive roller. Therefore this drive roller or its drive shaft must protrude through the side rail for direct coupling with the reducer. Also attached to the side rail, next to the motor and reducer, are controller units. As one can see the attachment side of the rail is very crowded and allows easy access, which is preferred for servicing but creates danger for workers.

WO 2013/060502 A1 discloses a clutch and brake unit which may be arranged below the rollers when mounted to the inside of the conveyor side rail. The clutch and brake unit comprises a drive roller portion which is connected to an endless drive belt which spans the length of the conveyor and is reeved around a separate drive means at least at one end. This makes it necessary to have supports for the endless drive belt along its length and to tension it respectively.

In contrast thereto, the object of the invention is to provide a compact gear and drive unit which may be universally used in many types of material handling conveyors independent of their width and which is easily assembled and mounted at user-defined positions.

This object is achieved by the compact gear and drive unit stated in claim 1.

In accordance with the invention, it has been recognized that when the gear and drive unit comprises a housing, a motor roller for direct connection with a drive motor and a drive roller for driving a roller of a conveyor by means of an endless traction means, wherein said motor roller drives said drive roller by means of a second endless traction means and wherein the motor roller, drive roller and second endless traction means are all located within the housing, it is possible to achieve a small compact form factor.

This in turn allows for easy attachment and mounting to a conveyor etc.

The use of the second endless traction means allows easy assembly and makes it possible to vary the ratios of the gear reduction etc. by varying the rollers without need for complex re-gearing. It also allows driving the roller of a conveyor independently of its width.

This solution does not require any specific driven roller. All rollers of the conveyors are the same and the position of the compact drive and gear unit can be changed or drives be added without modification or relocation of any roller of the conveyor or changes to the roller beds.

The compact gear and drive unit essentially consist of only 6 parts: the two rollers, the belt and the housing (two parts) as well as counting the attached motor. It only needs two screws, bolts etc. be assembled and two or more further screws, bolts for attachment of the motor and two further screws, bolts etc. for attachment at the predetermined position on the device (e.g. conveyor side rail) to be driven.

The housing may comprise an integrated attachment flange for the motor, such that the motor is easily attached and its output couples with the motor roller in a positive or interlocking manner.

The housing is designed to meet the required environmental protection class for all integrated components without additional measures.

A special feature of the compact gear and drive unit is that the housing comprises an integrated finger protection. This allows protecting the workers fingers from the (first) endless traction means for driving the roller when in use. The integrated finger protection is arranged on the output side of the housing and may comprise projecting webs with predetermined break outs, which can be broken out depending on the position and orientation of the compact gear and drive unit and the roller to be driven and therefore the run of the endless traction means. In this way the output of the drive roller is protected from direct contact with workers fingers, hands etc., especially as the output side of the housing is also the attachment side of the housing to e.g. a side rail of a conveyor etc.

The housing may further comprise integrated orientation means and/or mounting position orientation means, such that only certain predetermined orientations and/or positions of mounting are possible which makes orientation and positioning easy but flexible when installation takes place, especially onsite. The orientation means and/or mounting position orientation means may be one or more polygon shaped protrusions, e.g. a nut, especially e.g. a hexagon nut, which fit into a corresponding blank-outs in the side rails of conveyors etc., such that the orientation of the compact gear and drive unit e.g. is only possible in 60 degree steps. Therefore each drive may be positioned and orientated exactly where and how it is needed, directly onsite.

If the housing, said motor roller and said drive roller are injection molded parts, then the compact gear and drive unit may be produced at low costs in an efficient manner. It is also simple to adapt the compact gear and drive unit to changing requirements by e.g. exchange with a more powerful motor or different gear ratio by change of the drive and motor roller diameters. The exchange of parts/components may be performed onsite as it is easy.

The second endless traction means between said motor roller and said drive roller may be a belt, toothed belt or poly-V-belt. Such endless traction means may also be used for the (first) endless traction means. Such belts etc. may be pretensioned during assembly and run particularly smooth and quietly and these are readily available and adaptable to changing requirements (roller diameters, distances etc.). It is also possible to drive more than one roller at the same time, for example by use of two endless traction means reeved around the drive roller simultaneously.

The housing may also incorporate an integrated pocket for a controller board and/or cable connections, which can be provided in the injection mold process. The pocket may have snap-in-means.

The compact gear and drive unit according to the invention may be used as an airless drive for zone accumulation conveyors, merges and diverts, right-angle-transfers, rack conveyors, swivelable-wheel-drives, popup-wheel-drives. Due to its small size and modular build it easily used in applications with restricted size constraints as is the case in rack conveyors in shuttle applications.

It may also be used in uphill conveyor solutions and in these two or more electronically synchronized (master-slave-controlled) compact gear and drive units may be used in parallel to deal with increased load.

The compact gear and drive unit according to the invention especially useful in zone conveyors and zone accumulation conveyors, in which several compact gear and drive units are used, each to drive a different zone respectively. The controllers may then be daisy-chained in a simple fashion as they are readily accessible in their pockets.

Summarizing the gear and drive unit according to the invention is especially compact and as such may be used to drive conveyers etc. where available space is low. It further finds application where many drives must be provided, e.g. zone conveyors, as it is inexpensive and readily adaptable to the requirements by change of gear ratio, motor, controller etc. The invention therefore provides for a modular build.

Further features and details of the invention are apparent from the description of the drawing hereinafter, in which
- figure 1: depicts a longitudinal section view of a zone accumulation roller conveyor;
- figure 2: depicts an enlarged view of a portion of figure 1;
- figure 3: depicts a perspective view of the attachment side of the compact gear and drive unit;
- figure 4: depicts a perspective view of the non-attachment side of the compact gear and drive unit;
- figure 5: depicts an exploded view of figure 4 and

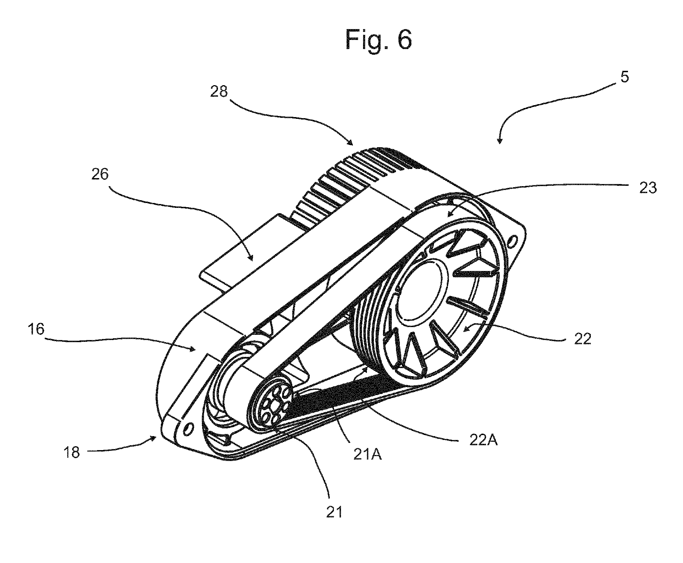

- figure 6: depicts a view of figure 4 with the cover of the housing removed.

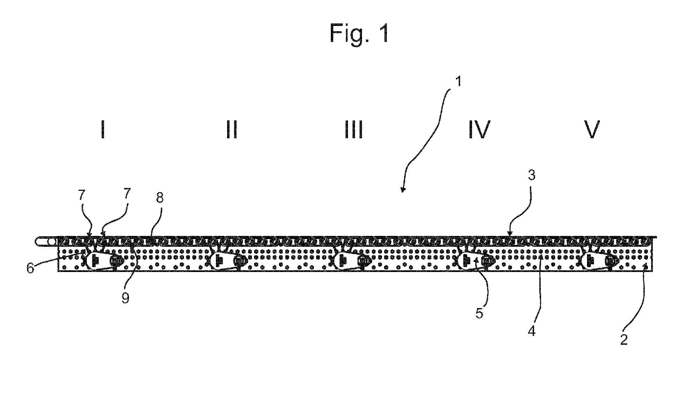

In figure 1 a longitudinal section view of a zone accumulation roller conveyor 1, of which five adjoining accumulation zones I, II, III, IV and V are shown.

The accumulation conveyor 1 has facing side channels or side rails 2, in between which the rollers 3 are arranged and which also carries the rollers 3.

The side rails 2 have a plurality of hexagon shaped blank-outs 4, which are arranged in uniformly spaced rows, reiterating patterns and grids.

The blank-outs 4 are used for attaching compact gear and drive units 5 according to the invention to the side rails 2, on the inner side underneath the rollers 3 to be driven.

Each zone I, II, III, IV and V is driven by a single compact gear and drive unit 5, which is positioned approximately in the middle of the zone seen in a longitudinal direction.

Each zone I, II, III, IV and V is divided into two sections A, B, which are both driven by the same compact gear and drive unit 5 by means of two poly-v-belts 6. In other words two poly-v-belts 6 each drive one of the two sections of an accumulation zone I, II, III, IV, V and both poly-v-belts 6 are driven by the same compact gear and drive unit 5.

The roller 7 driven by the poly-v-belt 6 in turn drives the other rollers 8 in the corresponding section my means of a belt 9 reeved around the roller 7 and the rollers 8.

The compact gear and drive units 5 are daisy-chained (not shown) via the controllers 10 that are attached to the housing 11 of each compact gear and drive unit 5 in a pocket 12 with snap-in holders 13. The daisy-chained controllers 10 are connected to a central zone accumulation controller, in a known fashion.

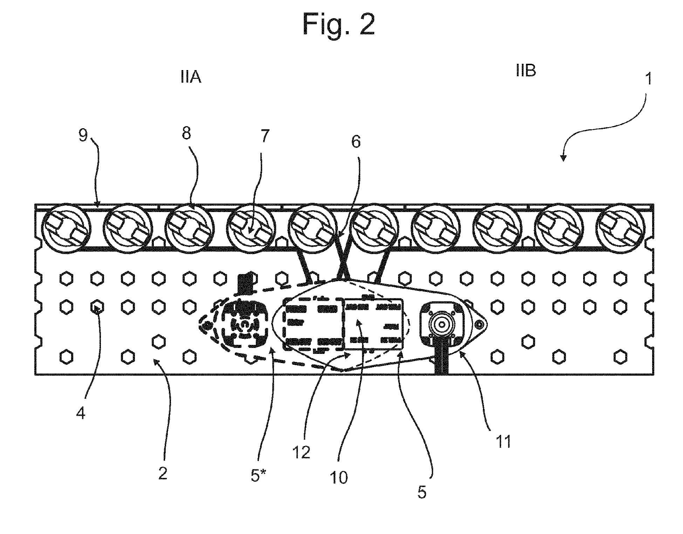

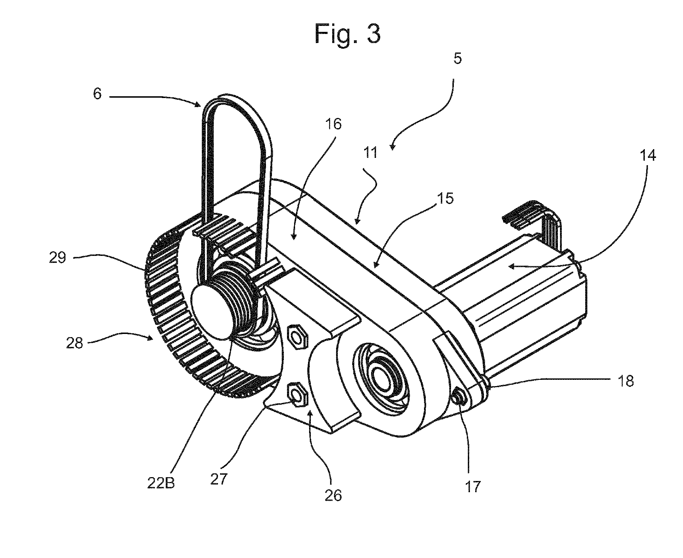

As can be seen in figure 2, the compact gear and drive units 5 may be positioned and fastened to the side rails 2 with the help of the blank-outs 4, into which respective hexa-nuts 13 (see figure 3) on the housing 11 form-fit.

As the blank-outs 4 are arranged in a grid (see above) it is possible to orientate and position the compact gear and drive units 5 as needed. For example, hashed compact gear and drive unit 5* is fixed to the side rail 2 in a 180 degree rotated orientation when compared to hashed compact gear and drive unit 5. Other orientations, e.g. vertically oriented etc. are obviously also possible.

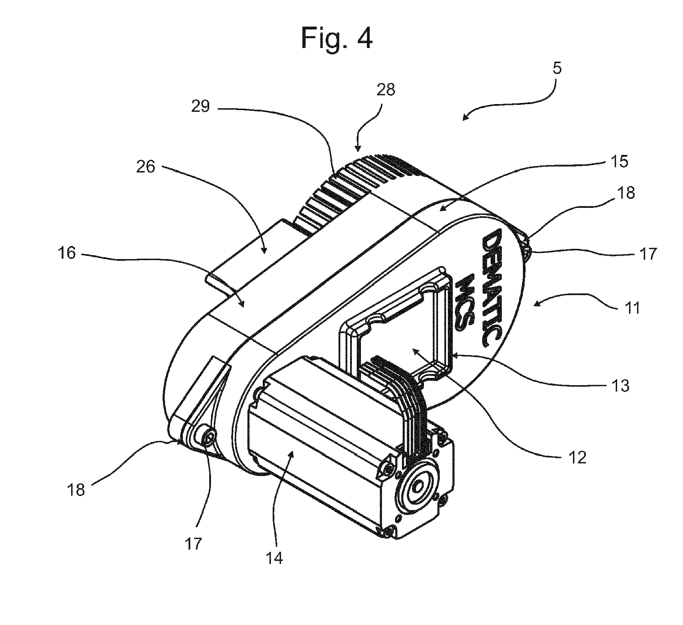

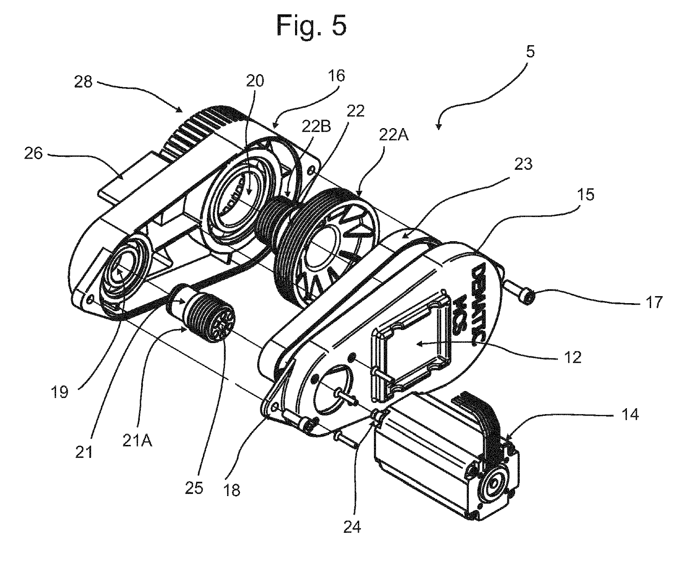

Compact gear and drive unit 5 (see figure 3 to 5) comprises a housing 11 and a motor 14, that is attached (screwed) to the lid or cover 15 (from the inside, see figure 5) of the base 16 of the housing 11.

The cover 15 is fixed to the base 16 by screw/nut assemblies 17 in flanges 18 on the left and right hand side of the housing 11. The housing 11 has a generally oval shape.

The pocket 12 with the snap-in holders 13 is formed integrally with the cover 15 and positioned on its outside surface next to the motor position.

The base 16 has seats for bearings 19, 20 for the motor roller 21 and the drive roller 22, which are drivably connected by a poly-v-belt 23. Therefore both the motor roller 21 of smaller diameter and the drive roller 22 with greater diameter have a correspondingly grooved surface 21 a, 22a around which the belt 23 is reeved.

The motor 14 is coupled directly to the motor roller 21 by form fit of the output-shaft 24 in the center bore 25 of the motor roller 21.

The drive roller 22 has a second grooved surface 22b on which the one or more poly-v-belt 6 is reeved for driving the roller(s) 9 of the conveyor zone (see figure 3).

Next to the second grooved surface 22b in the base 16 on the attachment side between the motor roller 21 and the drive roller 22 a protrusion 26 is positioned which includes two protruding hexagon shaped threaded nuts 27, which cooperate with the blank-outs 4.

For installation the compact gear and drive unit 5 is positioned with the hexagon nuts 27 in the corresponding blank-outs 4 according to the position and orientation needed an then fastening screws are inserted from the outside of the rails 2 into the hexagon shaped threaded nuts 27 for fixing.

The housing 11 features integrated finger protection means 28 comprising projecting webs 29 with predetermined break outs arranged in a circular fashion around the drive roller output (grooved surface 22b) protruding from the base 16 on the attachment side.

These webs 29 or strips can be broken off corresponding to the run of the belt 6, such that the belt 6 can freely contact the surface 22b and the roller 7, but fingers may not make contact with the surface 22b (see figure 3).

## Claims

1. Compact gear and drive unit, especially for conveyors, with a housing, a motor roller for direct connection with a drive motor and a drive roller for driving a roller of a conveyor by means of an endless traction means, wherein said motor roller drives said drive roller by means of a second endless traction means and wherein the motor roller, drive roller and second endless traction means are all located within the housing.

2. Compact gear and drive unit according to claim 1, wherein the housing comprises an integrated attachment flange for the motor.

3. Compact gear and drive unit according to claim 1 or 2, wherein the housing comprises an integrated finger protection.

4. Compact gear and drive unit according to claim 3, wherein the integrated finger protection comprises projecting webs with predetermined break outs.

5. Compact gear and drive unit according to any of the proceeding claims, wherein the housing comprises integrated orientation means and/or mounting position orientation means.

6. Compact gear and drive unit according to any of the proceeding claims, wherein said housing, said motor roller and said drive roller are injection molded parts.

7. Compact gear and drive unit according to any of the proceeding claims, wherein said endless traction means between said motor roller and said drive roller is a belt, toothed belt or poly-V-belt.

8. Compact gear and drive unit according to any of the proceeding claims, wherein the ratio of drive roller and motor roller can be varied within the housing.

9. Compact gear and drive unit according to any of the proceeding claims, wherein said housing has an integrated pocket for a controller board and/or cable connections.

10. Use of a compact gear and drive unit according to any of the proceeding claims as an airless drive for zone accumulation conveyors, merges and diverts, right-angle-transfers, rack conveyors, swivelable-wheel-drives, popup-wheel-drives.
